**Europäisches Patentamt**

**European Patent Office**

**Office européen des brevets**

(11) Publication number: **0 138 246**
**B1**

(12) **EUROPEAN PATENT SPECIFICATION**

(45) Date of publication of patent specification: **16.05.90**

(21) Application number: **84201243.7**

(22) Date of filing: **28.08.84**

(51) Int. Cl.⁵: **G 11 B 20/10**

(54) **Disc playback apparatus.**

(30) Priority: **01.09.83 JP 161515/83**

(43) Date of publication of application:
**24.04.85 Bulletin 85/17**

(45) Publication of the grant of the patent:
**16.05.90 Bulletin 90/20**

(84) Designated Contracting States:
**AT BE CH DE FR GB IT LI NL SE**

(56) References cited:
**EP-A-0 093 969**
**FR-A-2 520 914**
**GB-A-2 101 356**

(73) Proprietor: **N.V. Philips' Gloeilampenfabrieken**
**Groenewoudseweg 1**
**NL-5621 BA Eindhoven (NL)**

(72) Inventor: **Monen, Marinus Johannes B.M.**
**c/o INT. OCTROOIBUREAU B.V. Prof. Holstlaan 6**
**NL-5656 AA Eindhoven (NL)**
Inventor: **Furukawa, Shunsuke**
**c/o INT. OCTROOIBUREAU B.V. Prof. Holstlaan 6**
**NL-5656 AA Eindhoven (NL)**
Inventor: **Furuya, Tusneo**
**c/o INT. OCTROOIBUREAU B.V. Prof. Holstlaan 6**
**NL-5656 AA Eindhoven (NL)**

(74) Representative: **Peters, Rudolf Johannes et al**
**INTERNATIONAAL OCTROOIBUREAU B.V. Prof.**
**Holstlaan 6**
**NL-5656 AA Eindhoven (NL)**

Courier Press, Leamington Spa, England.

## Description

The invention relates to a disc playback apparatus using a disc on which main digital data and sub digital data to selectively reproduce said main digital data have been recorded in a common track, the apparatus comprising reading means for reading the main digital data and the sub digital data from the disc, means for generating a first write clock synchronized with the data read from said disc, means for generating a readout clock at a fixed period, a first buffer memory in which said main digital data reproduced from the disc is written by said write clock and from which said main digital data written is read out by said readout clock, control means for controlling the search for a playback location of main digital data in dependence on the sub digital data read from the disc.

Such apparatus is known from the system disclosed in FR—A—2 520 914. Such system which is known as the compact disc digital audio system is intended for the reproduction of audio information.

If digital data such as data representative of characters, display data, program data, etc. other than audio information can be reproduced by this disc system without extensively modifying the arrangement of the player, it will be possible to realize a playback apparatus for reproducing visual information such as charts and statistics by graphics, pictorial illustration by still pictures, and a video game apparatus by adding a display unit, thereby providing a wide range of application for a compact disc system. The data memory capacity of the current compact disc is about 500 Mbytes, and therefore, a compact disc has a much greater storage capacity compared with that of a standard flexible disc.

On the other hand, compact discs are principally utilized for reproduction of audio signals; thus, the beginning of the data on the disc is searched on a relatively large unit basis such as music program unit or phrase unit. However, as a memory device, the data has to be read out on a smaller unit basis in the order of 128 bytes to 10 Kbytes.

In case of the musical sounds, the degree of accuracy required for searching the beginning of a music program may be low within a range where no problem will be caused in terms of audible sense. Therefore, the audio data in the main channel which was separated from the reproduction signal from the compact disc is once written in the buffer memory and is subject to error correction processing, and at the same time, the variation of the time base in the data is eliminated. However, the time base variation of the subcoding signal is not eliminated for the purpose of reduction of the constructional cost since severe searching accuracy is not required as described above. Consequently, if one tries to use the compact disc playback apparatus as a data memory, there is a problem such that it is impossible to specify correctly the read address by the subcoding signal.

It is an object of the present invention to provide a disc playback apparatus which can read out digital signals of program, data or the like in place of digital audio signal by utilizing a disc for the standard digital audio.

According to the invention this object is attained by an apparatus characterized in that the apparatus comprises a second buffer memory placed in the signal path for supplying the sub digital data from the reading means to the control means, the sub digital data being written in the second buffer memory with a second write clock synchronized with the first write clock, and the subcode data written in the second buffer memory being read with a second read clock synchronized with the first read clock, so as to maintain a fixed time relationship between the main digital data read out from the first buffer memory and the digital data read out from the second buffer memory.

According to the present invention, it is possible to realize a disc memory device having a much larger memory capacity than a conventional flexible disc, and to read out the digital signal on such a unit basis as the amount suitable for handling.

Moreover, according to the present invention, for a disc for playing back stereophonic musical signals such as an already commercially available compact disc, it is possible to record digital data other than the stereophonic musical signals while maintaining the consistency with respect to the signal format and signal processing such as the error correcting method and recording data format, or the like.

The present invention will now be described, by way of example, with reference to the accompanying drawings, wherein:

Figs. 1 and 2 are schematic diagrams which are used to describe the data arrangements of the recording data of a compact disc to which this invention is applied;

Fig. 3 is a schematic diagram showing the arrangement of one block upon recording the digital data in one embodiment of this invention;

Fig. 4 is a block diagram showing an overall arrangement of one embodiment of this invention;

Fig. 5 is a schematic diagram showing a word format of the serial data in one embodiment of this invention;

Fig. 6 is a schematic diagram which is used to describe the construction of the subcoding signal in another embodiment of this invention;

Fig. 7 is a block diagram as an example of the error correction encoder for the subcoding signals;

Fig. 8 is a block diagram as an example of the error correction decoder for the subcoding signal; and

Figs. 9 and 10 are schematic diagrams showing the timing relationships between the subcoding signal and the data in the main channel with respect to the recording processing and reproducing processing, respectively.

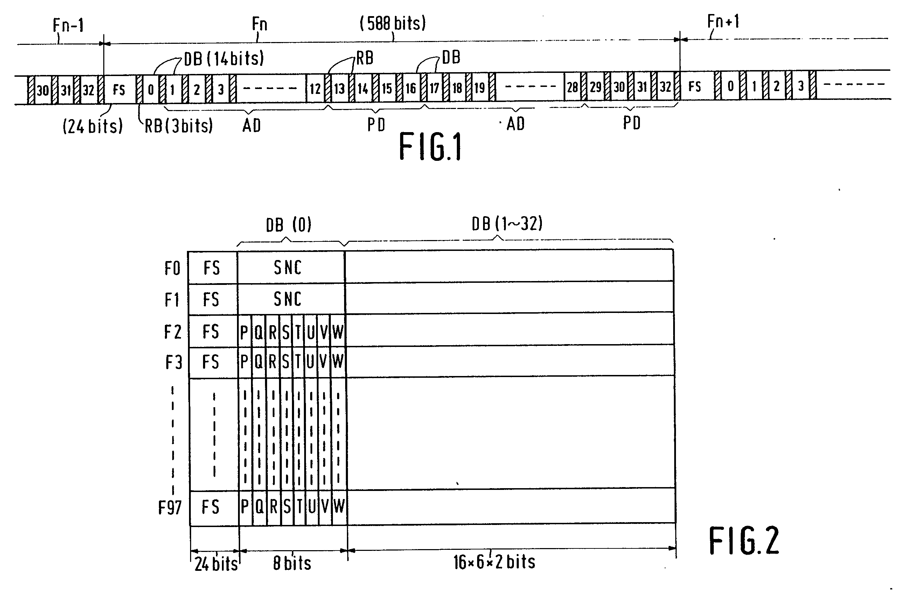

Fig. 1 shows the data stream recorded on a compact disc. One frame consists of 588 bits of record data, and each frame F has at its head a frame sync pulse FS of a specific bit pattern. The frame sync pulse FS is followed by 3-bit DC-restriction bits RB. Thereafter, the 0th—32nd data bits DB, each data bit DB comprising 14 bits, and the 3-bit DC-restriction bits RB are further recorded alternately. The 0th bits among these data bits DB are called a subcoding signal or user's bits, and used to control the playback of a disc and to display the relating information or the like. The 1st—12th and 17th—28th data bits DB are assigned for audio data AD in the main channel. The remaining 13th—16th and 29th—32nd data bits DB are assigned for parity data PD of the error correction code in the main channel. Each of the data bits DB consists of 14 bits into which the 8-bit data has been converted by the 8—14 conversion upon recording.

Fig. 2 shows the composition of one block of 98 frames $F_0$—$F_{97}$, these 98 frames are arranged sequentially in parallel, and each of the data bits DBs is represented by 8 bits and the DC-restriction bits are excluded. The subcoding signals P—W in the 0th and 1st frame $F_0$ and $F_1$ form the sync patterns SNC which are predetermined bit patterns. For the Q channel, the CRC codes for error detection are inserted in the latter 16 frames among the 98 frames.

The P-channel signal is a flag to indicate a music program and a pause, and has a lower level throughout the duration of a music program and a higher level throughout the duration of a pause, and has pulses with a frequency of 2-Hz in the lead-out section. It is possible to select and play back the specified music program by detecting and counting this signal in the P channel. The Q channel enables the more complicated control of this type. For example, when the Q-channel information is stored in a microcomputer provided in the disc playback apparatus, it is possible to shift quickly from one music program to another during the playback of a music program; thus, respective ones of the record music programs may be selected at random. The other R through W channels can be used to indicate or explain by audible voice an author, composer, explanation, poetry, or the like of the music programs recorded on the disc.

Among 98 bits in the Q channel, the first two bits are used for a sync pattern; the next four bits for control bits; the next following four bits for address bits; and the subsequent 72 bits for data bits; and finally a CRC code for error detection is added. A track number code TNR and an index code X are included in 72 bits representative of the data bits. The track number code TNR can be varied from 00 to 99 and the index code X can be likewise changed from 00 to 99. Furthermore, the data in the Q channel contains a time indication code representative of the time durations of music programs and pauses, and a time indication code indicative of an absolute time duration that continuously changes from the beginning to the end on the outermost rim side in the program area of the compact disc. These time indication codes comprise the codes indicating minute, second and frame each consisting of two digits. One second is divided into 75 frames. In order to assess the compact disc on a shorter unit basis than for music, such as for digital data, the time indication code with respect to the above-mentioned absolute time duration is used.

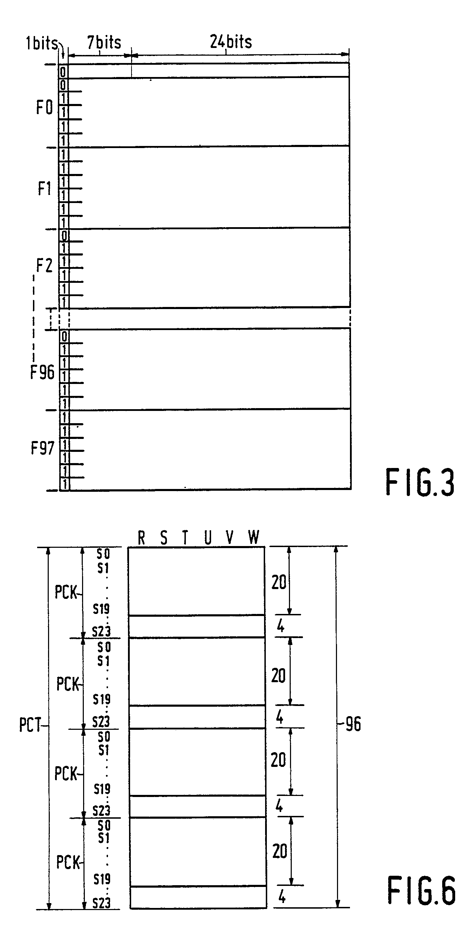

As described above, a minimum unit of change of a subcoding signal for a compact disc is 98 frames. In this embodiment, in case of recording digital signals other than the stereophonic musical signals, which digital signals are as shown in Fig. 3, one block is constituted by the length of 98 frames corresponding to from the 0th to 97th frames. As already stated, one frame includes the digital audio data consisting of 12 words, so that 24-byte digital data can be inserted in one frame. Referring to Fig. 3, one row contains total 32 bits of one sample in the L channel of the audio data and one sample in the R channel thereof, and each frame consists of such six rows.

Each one-bit sync bit is added to the head of the 32-bit row. Each sync bit in the respective heads of the first 32 bits in the frame $F_0$ and the next 32 bits is zero. The sync bits in each head of the respective first 32 bits in the frames bearing even numbers except the 0th frame $F_0$ are zero, while the sync bits in each head of the respective first 32 bits in the frames bearing odd numbers are one. These sync bits enable the detection of the head location of the block on a 98-frame unit basis.

The above-mentioned one block consists of (24 bytes × 98 = 2352 bytes). The data of 2 Kbytes (2048 bytes) is inserted in one block, and 304 bytes (2432 bits) remain. (6 × 98 = 588 bits) are used as sync bits. A 7-bit mode signal and a 24-bit address signal are inserted in the first 32 bits in the 0th frame $F_0$, so that 1813 bits still remain in one block. These 1813 bits can be assigned to redundant bits when the error correction coding processing is performed for the data of one block.

The mode signal serves to specify the kind of data in that block. For example, the mode signal is used to discriminate character data, still picture data and program code. The address signal serves to specify the data in the block. Furthermore, the reason why the sync bits of the frames bearing even numbers are set to zero is that the present invention takes account of an arrangement of data block on a two-frame unit basis. For the block having a size of two frames, a mode signal and an address signal are added to each block. In case of the block having a length of 98 frames as in the embodiment of this invention, the codes for indicating the absolute time durations of the P data and Q data of the subcoding signals in the same block are identical.

The digital signals in the format shown in Fig. 3 can be recorded on a compact disc in the same manner as an audio compact disc. That is, a digital signal to be recorded is supplied to a digital input terminal of a digital audio processor and this digital signal is converted into a video signal format, thereby recording it using a video tape recorder of the rotary head type. In this case, TOC (table of contents) data to generate a subcoding signal is preliminarily recorded in the audio track in the leading edge section on a magnetic tape on which this digital signal will be recorded. Next, the TOC data reproduced from this magnetic tape is supplied to a subcoding generator, and the reproduced digital signal is supplied to an encoder, and the subcoding signal is further supplied to this encoder, then a laser beam is modulated on the basis of an output of the encoder. A master disc is made by means of this modulated laser beam.

As another method of recording a digital signal, there is a method whereby, for example, a hard disc memory that can be accessed at a high speed is accessed by a minicomputer and a digital signal is supplied in real-time to an encoder of a cutting system.

When recording the digital signal, since the time indication codes (consisting of each column representative of minute, second and frame) which are included in the Q channel of the subcoding signal are used as addresses, the corresponding relationships between these addresses and the digital signal are determined. Namely, since the digital signal in the main channel is recorded on a disc (master disc) through an encoder for the CIRC codes (which consist of the combination of two interleave series and the REED-SOLOMON code), the recording position on the disc of one data block (data of 98 frames) shown in Fig. 3 is located at a predetermined position. On the other hand, the signal of the time indication code included in the Q channel of the subcoding signal is a continuous code signal such that the columns of frames change on a 98-frame unit basis in the track on the disc and when the columns of frames reach 75 frames, the columns of second change, and furthermore, when the columns of second reach 60 seconds, the columns of minute change. As described above, the time indication code continuously changes from the first section in the program area on the disc to the end of the lead-out track; consequently, it can be used as an address for the digital signal to be recorded in a predetermined location as described previously.

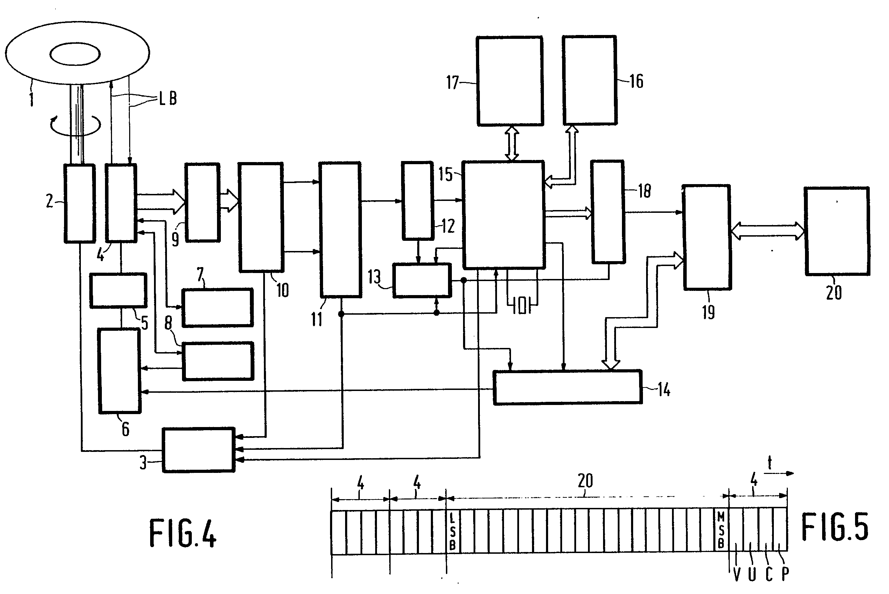

Fig. 4 shows an arrangement of one embodiment of this invention. In Fig. 4, a reference numeral 1 denotes a compact disc on which a digital signal of the above-described format has been spirally recorded. The compact disc 1 is rotated by a spindle motor 2. In this case, the spindle motor 2 is controlled by a spindle servo circuit 3 so that the compact disc 1 rotates at a constant linear velocity.

A numeral 4 indicates an optical head, which has a laser source for generating a laser beam LB for pickup, beam splitter, optical system such as objective lens or the like, photoreceptive device for receiving the reflected laser beam from the compact disc 1, etc. The optical head 4 can be moved in the radial direction of the compact disc 1 by a thread feed motor 5. The thread feed motor 5 is driven by a thread drive circuit 6. The optical head 4 can be deflected both in the direction perpendicular to the signal surface of the compact disc 1 and in the direction parallel thereto, and it is controlled so that the focusing and tracking operations by the laser beam upon playback are always properly performed. For this purpose, a focus servo circuit 7 and a tracking servo circuit 8 are provided.

A reproduction signal of the optical head 4 is supplied to an RF amplifier 9. The optical head 4 is provided with a focus error detecting section consisting of the combination of, for example, cylindrical lens and 4-dividing detector, and a tracking error detecting section using three laser spots. An output signal of the RF amplifier 9 is supplied to a clock extraction circuit 10. The outputs (data and clock) of this clock extraction circuit 10 are supplied to a frame sync detection circuit 11. The digital signal recorded on the compact disc 1 has been EFM modulated. The EFM modulation is a method of block converting 8-bit data into a preferable 14-bit pattern (i.e. 14 bits such as to provide a long minimum inverting time period of the modulated signal and reduce its low-frequency component). The digital demodulator 12 is constituted in such a manner as to carry out the demodulation of EFM. The bit clock recovered by a clock extraction circuit 10 and the frame sync signal detected by the frame sync detection circuit 11 are supplied to the digital demodulator 12 and the spindle servo circuit 3.

The subcoding signal is separated by the digital demodulator 12 and this separated subcoding signal is supplied through a buffer memory 13 to a system controller 14. The system controller 14 is equipped with a CPU, and the rotating operation of the compact disc 1, thread feeding operation, reading operation of the optical head 4, or the like are controlled by the system controller 14. Control commands are supplied to the system controller 14 through an interface 19, which will be described later. Namely, the reading operation of a desired digital signal from the compact disc 1 using the subcoding signal is controlled by the system controller 14.

The data digital data output from the digital demodulator 12 is supplied through an RAM controller 15 to an RAM 16 and an error correction circuit 17. The processings with respect to the elimination of variation of the time base, error correction and error interpolation are carried out by the RAM controller 15, RAM 16 and error correction circuit 17, so that the main digital data is derived from its outputs. Upon playback of a compact disc on which audio data has been recorded, D/A converters are connected to the RAM controller 15. In case of Fig. 4, no D/A converter is provided to fetch the digital data as it is from the outputs, and the reproduced digital data is supplied to a data converter 18. The reproduced subcoding signal is also supplied from the buffer memory 13 to this data converter 18, and the reproduced data is converted into the form of serial signal.

This serial signal is supplied to the interface 19, and the data for the system controller 14 is supplied from a microcomputer system 20 through the interface 19 to the controller 14. The microcomputer system 20 specifies a readout address and applies drive control signals such as start signals in addition to this readout address to the interface 19 and system controller 14.

Fig. 5 shows an example of the word format of the serial signal output from the data converter 18. For this serial signal, one word WRD consists of 32 bits; the first four bits are for preamble; next four bits for auxiliary bits of the audio data; and next 20 bits for digital audio sample. In the case where the digital audio sample consists of 16 bits, 16 bits from the least significant bit (LSB) are inserted. Four bits are added after the digital audio sample. Among these four bits, the first bit indicated by V is a flag to show whether the digital audio sample of that word is effective or not; bit U is each bit of the subcoding signal; bit C is a bit to identify the channel; and bit P is a parity bit. This bit U of the subcoding signal is inserted into each word format one bit by one and these inserted bits are sequentially transmitted.

In one embodiment of this invention, the time base variation of the subcoding signal is eliminated by the buffer memory 13. This time base correction is the same as that is executed by the RAM controller 15 and RAM 16 with respect to the digital signal in the main channel. Namely, the RAM controller 15 produces a write clock synchronized with the reproduction signal from the detected frame sync signal and writes the digital signal into the RAM 16 by this write clock, and when the digital signal is read out from the RAM 16, the read clock produced from an output of a crystal oscillator is used. These write clock and read clock are used to write and read out the subcoding signal into and from the buffer memory 13. Thus, the subcoding signal read out from the buffer memory 13 does not have the time base variation, so that it is prevented that the timing relationship between the digital signal in the main channel and the subcoding signal changes due to this time base variation.

In one embodiment of the present invention, a read instruction to a predetermined address is first executed by the microcomputer system 20. This address is a code itself for indicating an absolute time duration in the Q channel and is supplied through an interface 19 to the system controller 14. The system controller 14 controls the thread drive circuit 6 to move the optical head 4 to the location near a desired pickup location while supervising the subcoding signal reproduced by the optical head 4. In this example, the reproduction is started from the location spaced a few blocks apart to prevent such a malfunction that the access operation is not finished since an error is included in the reproduced subcoding signal and the set subcoding signal is not reproduced. The desired block is caught by either method of detecting the coincidence of the reproduced subcoding signal with the designated address, or starting the playback from the location near the correct subcoding signal and then counting the frame sync signals.

Different from the above-described embodiment of this invention, it may be possible to insert the address code signal of which the error correction code was coded in the R—W channels in the subcoding signal. Another embodiment of this invention will now be described whereby the address code signal is inserted in the R—W channels in this subcoding signal.

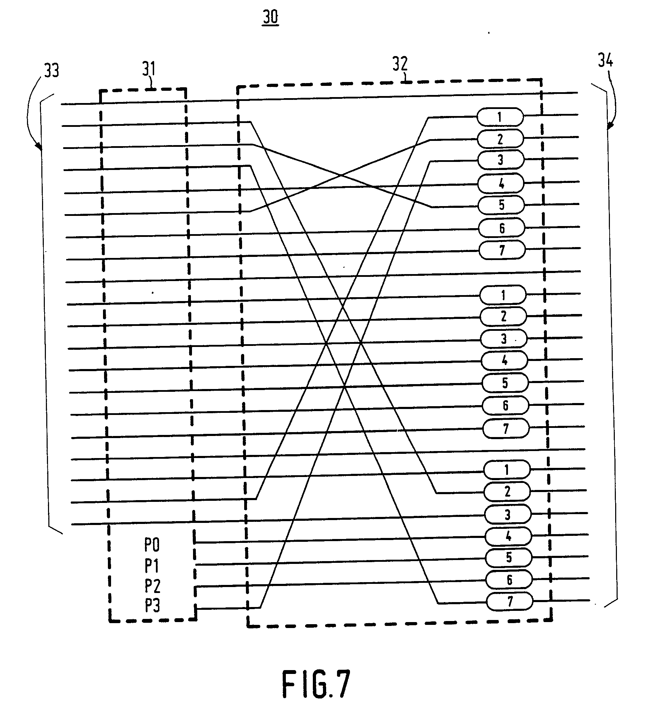

One packet PCT consists of the 96-frame data excluding the sync pattern and P and Q channels among one block consisting of 98 frames shown in Fig. 2. As shown in Fig. 6, this packet PCT of $(6 \times 96)$ bits is further divided into four packs PCK each having 24 symbols $S_0$—$S_{23}$. 20 symbols of each pack are address data, and the remaining 4 symbols are parity of the error correction code of each pack. A (24, 20) REED-SOLOMON code is used as an error correction code for this pack of $(6 \times 24)$ bits. This REED-SOLOMON code is expressed by a polynomial,

$$(P(X) = X^6 + X + 1)$$

over $GF(2^6)$, wherein GF represents a Galois field.

This REED-SOLOMON code including these four P-parity symbols can correct 1-symbol error and 2-symbol error and detect 3-or-more-symbol errors.

In Fig. 7, a reference numeral 30 denotes an error correction encoder with respect to R through W channels. This error correction encoder 30 consists of, as shown by the broken lines, a P-parity generator 31 of the previously mentioned (24, 20) REED-SOLOMON code and an interleaving circuit 32. Twenty input symbols 33 in the same pack are input to the P-parity generator 31 to generate the four parity symbols $P_0$, $P_1$, $P_2$, and $P_3$. The 24 symbols to be output from this P-parity generator 31 are supplied to the interleaving circuit 32.

The interleaving circuit 32 is constructed by an RAM and its address controller and generates the output data of which a predetermined delay time value has been added to each symbol of the input data by controlling the write addresses and the read addresses. As shown in Fig. 7, means for adding the predetermined delay time value to each symbol is represented as a plurality of delay elements for simplicity of understanding. As such delay elements, the following delay elements are used: three delay elements to give a delay time value of one pack (24 symbols): three delay elements to give a delay time value of two packs; 3 delay elements to give a delay time value of 3 packs; 3 delay elements to give a delay time value of 4 packs; 3 delay elements to give a delay time value of 5 packs; 3 delay elements to give a delay time value of 6 packs; and 3 delay elements to give a delay time value of 7 packs. The delay time value of the symbol in which no delay element is inserted is set to 0. As described above, three combinations each consisting of eight kinds of delay time values of 0—7 packs are provided. An output symbol 34 of one pack is generated from this interleave circuit 32.

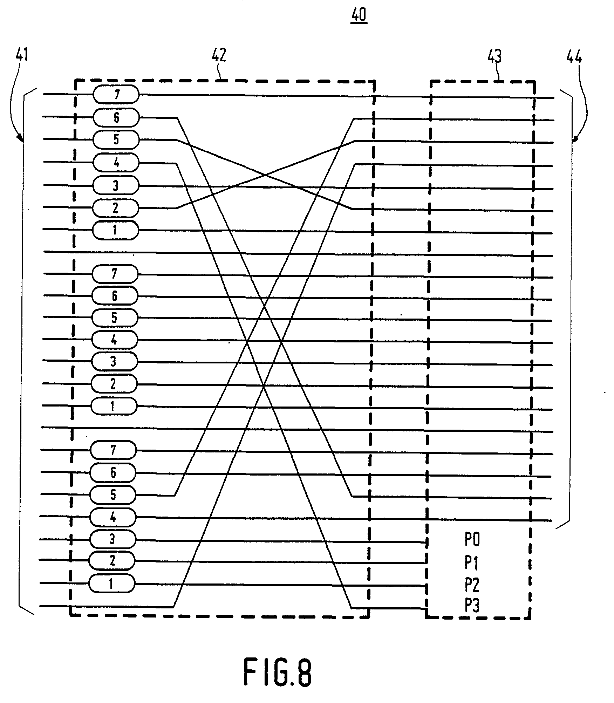

In Fig. 8, a reference numeral 40 denotes an error correction decoder with respect to the R through W channels.

This error correction decoder 40 comprises, as shown by the broken lines, a de-interleaving circuit 42 to which 24 symbols 41 in one pack of the reproduced subcoding signals are supplied, and a P-decoder 43 of the (24, 20) REED-SOLOMON code to which an output of this de-interleaving circuit 42 is supplied. The input data 41 to the de-interleaving circuit 42 corresponds to the output data 34 from the interleaving circuit 32 of Fig. 7. The de-interleave processing is performed so that the delay time values given by this interleaving circuit 32 are cancelled and each symbol has evenly the delay time values of seven packs. Actually, this de-interleaving is performed by controlling the write addresses and read addresses in the RAM. In Fig. 8, the de-interleaving circuit 42 is shown which is constructed such that the delay elements having predetermined delay time values are arranged in the transmission lines of each symbol. The delay elements of seven packs are inserted into the transmission lines of the symbols having the delay time value of 0 in the interleaving circuit 32, respectively. The delay elements of 6, 5, 4, 3, 2, and 1 packs are inserted respectively into the transmission lines of the symbols having the delay time values of 1, 2, 3, 4, 5, and 6 packs in the interleaving circuit 32. No delay element is inserted into the transmission line of the symbol having the delay time value of seven packs in the interleaving circuit 32.

The P-decoder 43 has a syndrome generator to generate four syndromes by calculation of $(H_p \cdot V_p)$ (wherein $H_p$: parity check matrix, $V_p$: reproduction data matrix). The checking of these four syndromes enables the detection of 1-symbol error, 2-symbol error, and 3-or-more-symbol errors, and by obtaining the error locations of the 1-symbol error and 2-symbol error, these errors can be corrected. As the output of the P decoder 43, an error corrected output data 44 is obtained.

It may be possible to use a complete-type interleave processing whereby the symbols in a plurality of packs are written in the RAM and the above-mentioned symbols in a plurality of packs are read out from the RAM using the read addresses in the sequence different from the change in these write addresses.

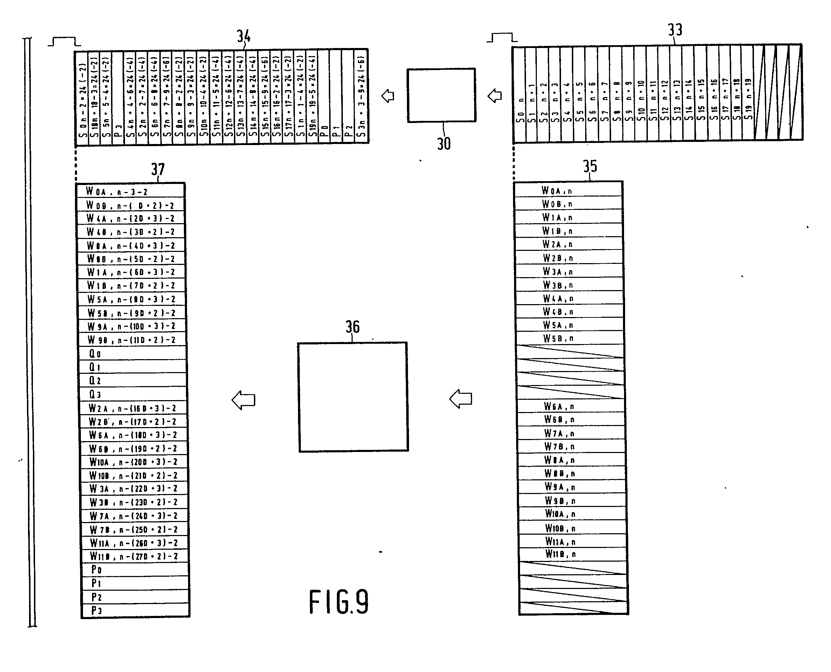

Fig. 9 shows the timing relationship between the subcoding signal and the main channel when recording on a master disc. The input symbol 33 consisting of 20 symbols is supplied to the aforementioned error correction encoder 30. In Fig. 9, a reference character SSY shows a subcode sync representative of the timings of the 0th and 1st frames among the 98 frames in which the sync pattern of the subcoding signal is included. The 20 symbols in the R to W channels which are respectively included in the 2nd through 21st frames among the 98 frames just after this subcode sync SSY correspond to the input symbol 33.

This input symbol 33 contains the symbols which are indicated by $S_{0n}$, $S_{1n+1}$, $S_{2n+2}$, ———, $S_{18n+18}$, and $S_{19n+19}$. The suffix which sequentially changes like 0, 1, 2, ———, 18, and 19 indicates the symbol number in one pack, and the suffix which sequentially changes like n, n+1, ———, n+18, and n+19 shows the number of frame in which each symbol is included. In Fig. 9, a numeral 35 indicates data $W_{0A,n}$, $W_{0B,n}$, $W_{1A,n}$, ———, $W_{11A,n}$, $W_{11B,n}$ of 24 symbols (one symbol consists of 8 bits) which are included in one frame, e.g. the nth frame $F_n$ in the main channel. That is, the input symbol 33 of the subcoding signal and the data 35 in the main channel shown in Fig. 9 are the data in the nth frame at the stage before they are encoded.

The input symbol 33 is supplied to the error correction encoder 30 mentioned previously, so that the output symbol 34 of one pack is generated. This output symbol 34 exhibits the actual symbol in the case where the interleaving circuit 32 of the error correction encoder 30 is constituted by a memory. If the interleaving circuit is constituted by a memory, the delay time corresponding to two packs will be caused since the data of one pack is once stored in the memory and then this is read out, thereby to perform the interleave processing. As a result, this means that the delay time value of two packs is added to the delay time value shown in Fig. 7, for example, the symbol of $S_{0n-2 \times 24 \ (-2)}$ is generated from the error correction encoder 30 in response to the symbol $S_{0n}$ in the input symbol 33. (—2) in this suffix means two frames in which the subcode sync SSY is included: this suffix number is set to (—2) for the delay time value of up to 98 symbols, to (—4) for the delay time value of up to 196 symbols, and to (—6) for the delay time value of up to 294 symbols.

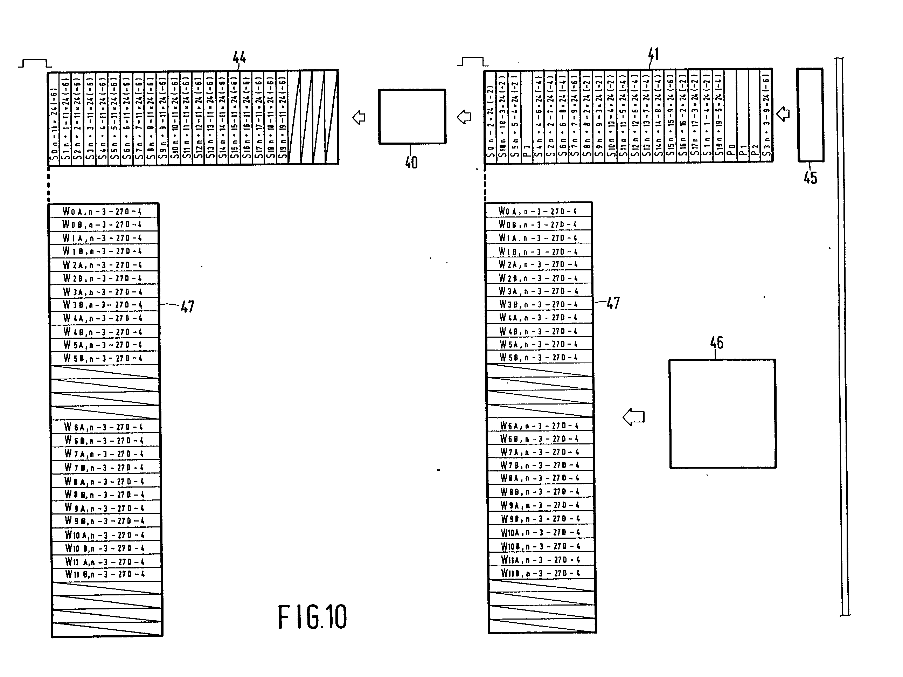

The data 35 in the nth frame in the main channel is supplied to an encoder 36 in the main channel and the coding processing of the CIRC code is performed, so that output data 37 consisting of 32 symbols which include parities $P_0$, $P_1$, $P_2$, and $P_3$ of one interleave series and parities $Q_0$, $Q_1$, $Q_2$, and $Q_3$ of the other interleave series is derived as an output of the encoder 36. In Fig. 9, each suffix concerning the respective parities of the subcoding signal and of the data in the main channel changes in dependence upon the construction of the encoder; this suffix is omitted since it is not so important for the description of the present invention. The outputs 34 and 37 from the error correction encoders 30 and 36 are recorded on the disc. Fig. 10 shows the timing relationship between the subcoding signal and the main channel when these outputs 34 and 37 are not recorded on the disc but are directly supplied to the reproduction signal input terminals of the reproduction circuit of the compact disc.

The input subcoding signal is first supplied to a buffer memory 45, where the time base variation is eliminated. Assuming that the delay in this buffer memory 45 is neglected for simplicity of explanation, the input symbol 41 to the error correction decoder 40 is identical to the output symbol 34 of the error correction encoder 30. The input data in the main channel is supplied to a decoder 46, where the time base variation is eliminated and the de-interleave and error correction processings are performed, so that a reproduction data 47 of 24 symbols is obtained. Fig. 10 also shows the reproduction data 47 in the main channel in the same frame as the symbols $S_{0n-2x24(-2)}$ among the input symbol 41.

The subcoding signal is supplied to the error correction decoder 40 shown in Fig. 8, where the de-interleave and error correction processings are performed, so that the output symbol 44 is derived. As described previously, the timing relationships of Figs. 9 and 10 are shown on the assumption of one signal system that integrates both recording and reproducing. Therefore, the outputs 44 and 47 of Fig. 10 show the outputs which are output from the error correction decoders 40 and 46 when the inputs 33 and 35 in the nth frame are supplied respectively to the error correction encoders 30 and 36. Namely, the symbol $S_{0n-11x24(-6)}$ among the output symbols 44 of the subcoding signal is the symbol in the (n-270)th frame. The data in the main channel in the same frame as this symbol is the data in the (n-115)th frame as will be obvious from the suffix of (n—3—27D—4) when (D=4).

As will be understood from Figs. 9 and 10, even if both the data in the main channel and the subcoding signal have been interleaved, by eliminating the time base variation, the reproduced subcoding signal and the data in the main channel have the relationship on a fixed time series, and it is possible to make them correspond.

The above description is based on the format of the subcoding signal of the compact disc that has been already proposed. However, in the case where the compact disc is used as a memory medium for the digital data, a new subcoding signal suitable for this purpose may be used. For example, the change period of the subcoding signal may be changed from, for example, 98 frames to 22 frames.

## Claims

1. A disc playback apparatus using a disc (1) on which main digital data and sub digital data to selectively reproduce said main digital data have been recorded in a common track, the apparatus comprising reading means (9, 10, 11, 12) for reading the main digital data and the sub digital data from the disc, means (10) for generating a first write clock synchronized with the data read from said disc, means for generating a readout clock at a fixed period, a first buffer memory (14, 15, 16) in which said main digital data reproduced from the disc (1) is written by said write clock and from which said main digital data written is read out by said readout clock, control means (14) for controlling the search for a playback location of main digital data in dependence on the sub digital data read from the disc, characterized in that the apparatus comprises a second buffer memory (13) placed in the signal path for supplying the sub digital data from the reading means (9, 10, 11, 12, 13) to the control means (14), the sub digital data being written in the second buffer memory (13) with a second write clock synchronized with the first write clock, and the subcode data written in the second buffer memory (13) being read with a second read clock synchronized with the first read clock, so as to maintain a fixed time relationship between the main digital data read out from the first buffer memory (14, 15, 16) and the digital data read out from the second buffer memory (13).

2. A disc playback apparatus according to Claim 1, characterized in that said first buffer (15, 16, 17) is used to decode an error correction code of said main digital data.

3. A disc playback apparatus according to Claim 1, characterized in that said sub digital data is an absolute time code signal indicating the play time from the beginning of the disc to the location on which the absolute time code has been recorded.

## Patentansprüche

1. Plattenspieler zur Verwendung einer Platte (1), auf der digitale Hauptdaten und digitale Unterdaten zum selektiven Wiedergeben dieser digitalen Hauptdaten in einer gemeinsamen Spur aufgezeichnet sind, wobei der Plattenspieler Lesemittel (9, 10, 11, 12) zum Lesen der digitalen Hauptdaten und der digitalen Unterdaten aus der Platte, Mittel (10) zum Erzeugen eines ersten, mit den von der Platte gelesenen Daten synchronisierten ersten Schreibtaktimpulses, Mittel zum Erzeugen eines Lesetaktimpulses in einer festen Zeitspanne, einen ersten Pufferspeicher (14, 15, 16), in dem mit dem Schreibtaktimpuls von der Platte (1) reprodizierten digitalen Hauptdaten eingeschrieben und von dem vom Lesetaktimpuls die eingeschriebenen digitalen Hauptdaten ausgelesen werden, und Steuermittel (14) zum Steuern der Suche nach einer Wiedergabestelle digitaler Hauptdaten in Abhängigkeit von den von der Platte ausgelesenen digitalen Unterdaten enthält, dadurch gekennzeichnet, dass der Plattenspieler einen im Signalweg angeordneten zweiten Pufferspeicher (13) zum Liefern der digitalen Unterdaten aus den Lesemitteln (9, 10, 11, 12, 13) zum Steuermittel (14) enthält, wobei diese digitaln Unterdaten von einem mit dem ersten Schreibtaktimpuls synchronisierten zweiten Schreibtaktimpuls in den zweiten Pufferspeicher (13) eingeschrieben werden, und die im zweiten Pufferspeicher (13) gespeicherten Untercodedaten von einem mit dem ersten Lesetaktimpuls synchronisierten zweiten Lesetaktimpuls gelesen werden, um ein festes Zeitverhältnis zwischen den aus dem ersten Pufferspeicher (14, 15, 16) gelesenen digitalen Hauptdaten und den aus dem zweiten Pufferspeicher (13) gelesenen digitalen Daten aufrechtzuerhalten.

2. Plattenspieler nach Anspruch 1, dadurch gekennzeichnet, dass der erste Pufferspeicher (15, 16, 17) zum Decodieren eines Fehlerkorrekturcodes der digitalen Hauptdaten verwendet wird.

3. Plattenspieler nach Anspruch 1, dadurch gekennzeichnet, dass die digitalen Unterdaten ein ·Absolutzeit-Codesignal sind, das die Spieldauer vom Anfang der Platte bis zur Stelle der Aufzeichnung des Absolutzeitcodes angibt.

**Revendications**

1. Lecteur de disques utilisant un disque (1) sur lequel des données numériques principales et des données numériques auxiliaires pour reproduire sélectivement les données numériques principales ont été enregistrées sur une piste commune, l'appareil comprenant un moyen de lecture (9, 10, 11, 12) pour lire les données numériques principales et les données numériques auxiliaires du disque, un moyen (10) pour générer un premier signal de validation d'écriture synchronisé avec les données lues sur le disque, un moyen pour générer un signal de validation de lecture à une période fixe, une première mémoire tampon (14, 15, 16) dans laquelle les données numériques principales reproduites à partir du disque (1) sont inscrites par le signal de validation d'écriture et à partir de laquelle les données numériques principales sont extraites par le signal de validation de lecture, un moyen de commande (14) pour commander la recherche d'un emplacement de lecture de données numériques principales en fonction des données numériques auxiliaires lues sur le disque, caractérisé en ce qu'il comprend une seconde mémoire tampon (13) placée dans le trajet des signaux pour fournir les données numériques auxiliaires du moyen de lecture (9, 10, 11, 12, 13) au moyen de commande (14), les données numériques auxiliaires étant inscrites dans la seconde mémoire tampon (13) avec un second signal de validation d'écriture synchronisé sur le premier signal de validation d'écriture, et les données de code auxiliaires inscrites dans la seconde mémoire tampon (13) étant lues avec un second signal de validation de lecture synchronisé sur le premier signal de validation de lecture, de manière à maintenir une relation de temps fixe entre les données numériques principales extraites de la première mémoire tampon (14, 15, 16) et les données numériques extraites de la seconde mémoire tampon (13).

2. Lecteur de disques suivant la revendication 1, caractérisé en ce que le premier tampon (15, 16, 17) est utilisé pour décoder un code de correction d'erreurs des données numériques principales.

3. Lecteur de disques suivant la revendication 1, caractérisé en ce que les données numériques auxiliaires sont un signal de code de temps absolu indiquant le temps de lecture depuis le début du disque jusqu'à l'endroit où le code de temps absolu a été enregistré.

EP 0 138 246 B1

Fn-1        Fn        (588 bits)        Fn+1

DB (14bits)    RB    DB

| 30 | 31 | 32 | FS | 0 | 1 | 2 | 3 | - - - - - | 12 | 13 | 14 | 15 | 16 | 17 | 18 | 19 | - - - - - | 28 | 29 | 30 | 31 | 32 | FS | 0 | 1 | 2 | 3 | - - - - - |

(24 bits)    RB(3bits)    AD        PD        AD        PD

# FIG.1

DB (0)           DB (1~32)

| | | | |
|---|---|---|---|
| F0 | FS | SNC | |
| F1 | FS | SNC | |
| F2 | FS | P Q R S T U V W | |
| F3 | FS | P Q R S T U V W | |
| ⋮ | ⋮ | ⋮ | |
| F97 | FS | P Q R S T U V W | |

24 bits    8 bits        16×6×2 bits

# FIG.2

FIG.3

FIG.6

EP 0 138 246 B1

LB

FIG.4

FIG.5

LSB

MSB

V U C P

t

FIG.7

FIG.8

FIG.9

FIG.10